# EUROPEAN PATENT APPLICATION

(11) **EP 3 375 327 A1**
(43) Date of publication of application: **19.09.2018**
(21) Application number: 16864149.6
(22) Date of filing: 07.11.2016
(51) Int. Cl.: A47B 21/013, F16H 37/12

(54) **COMPOSITE DRIVE DEVICE**

(30) Priority: 13.11.2015 JP 2015223384
(71) Applicant: Nidec Sankyo Corporation, Suwa-gun, Nagano 393-8511 (JP)
(72) Inventor: FURUBAYASHI, Kazumi, Suwa-gun, Nagano 393-8511 (JP)
(74) Representative: Emde, Eric
(86) International application number: PCT/JP2016/082924
(87) International publication number: WO 2017/082188

(57) **Abstract**

Provided is a composite drive device that can perform opening and closing of an opening by an opening-and-closing member and taking in and out of a driven member through the opening with a simple configuration. In particular, in a composite drive device 1, an opening-and-closing mechanism 6 drives an opening-and-closing member 4 by driving force of a common drive source 5, thereby opening and closing an opening. A linear drive mechanism 7 linearly moves the driven member 3 to one side Y1 and other side Y2 in the first direction Y by driving force of the common drive source 5, thereby moving the driven member 3 between an appearance position protruded to an outside from the opening and a wait position retracted to an inside from the opening. The composite drive device 1 is provided with a tilt drive mechanism that tilts a tip side of the driven member 3 in a second direction Z by driving force of the common drive source 5. In the tilt drive mechanism, when the driven member 3 is linearly moved by the linear drive mechanism 7, a contact section and the driven member 3 come in contact with each other, thereby changing the attitude of the driven member 3.

## Description

### TECHNICAL FIELD

The present invention relates to a composite drive device which performs a plurality of drive operations.

### BACKGROUND ART

As a composite drive device which performs a plurality of drive operations, for example, a device which opens and closes, an opening provided in a top board of a work desk, by an opening-and-closing member and causes a display member (driven member) disposed at the lower side of the top board to appear on the top board from the opening by a common drive source can be cited (see Patent Literatures 1 and 2). Patent Literature 1 suggests a configuration by which when a display member is caused to appear on a top board by an elevating device, an opening-and-closing member is rotated by the elevating device until it stands up behind a display departing from its prostrated attitude. In addition, Patent Literature 2 suggests a configuration by which a display member and an opening-and-closing member are caused to appear integrally on a top board by an elevating device.

### CITATION LIST

### PATENT LITERATURE

[Patent Literature 1] JP Patent Laid-Open No. 10-75829 A
[Patent Literature 2] JP Patent Laid-Open No. 2001-128755 A

### SUMMARY

### [TECHNICAL PROBLEM]

However, in the configurations disclosed in Patent Literatures 1 and 2, when the display member appears on the top board, the attitude of the display member is same as that of when waiting under the top board. Consequently, such configurations are not user friendly. Nevertheless, if another drive source or transmission mechanism is provided in a base or the like supporting the display member, the configurations become complicated.

In view of the above problems, it is a challenge of the present invention to provide a composite drive device that can perform opening and closing of an opening by an opening-and-closing member and taking in and out of a driven member through the opening with a simple configuration.

### [SOLUTION TO PROBLEM]

In order to solve the abovementioned problems, a composite drive device according to the present invention comprises: a frame provided with an opening configured to open toward one side in a first direction; a driven member located in an inside of the frame; an opening-and-closing member configured to close the opening; a drive source; an opening-and-closing mechanism configured to drive the opening-and-closing member by driving force of the drive source to open and close the opening; and a linear drive mechanism configured to linearly move the driven member to one side and other side in the first direction by the driving force of the drive source, thereby moving the driven member between an appearance position protruded to an outside from the opening and a wait position retracted to the inside from the opening.

In the present invention, even when the opening and closing of the opening by the opening-and-closing member and the driving of the driven member between the wait position and the wait position are performed, the opening-and-closing mechanism and the linear drive mechanism use the drive source in common. Therefore, the configuration of the composite drive device can be simplified.

In the present invention, an aspect comprising a tilt drive mechanism configured to tilt a tip side of the driven member to one side or other side in a second direction, which intersects a first direction, by the driving force of the drive source can be employed. According to such configuration, the opening and closing of the opening by the opening-and-closing member, taking in and out of the driven member through the opening, and adjusting of the attitude of the driven member can be performed with a simple configuration using one drive source.

In the present invention, a configuration can be employed in which the linear drive mechanism comprises a feed screw configured to rotate around an axis line extending in the first direction by the driving force of the drive source, and a first carriage configured to engage with the feed screw and move to one side in the first direction when the driven member is moved from the wait position to the appearance position.

In the present invention, it is preferable that the linear drive mechanism comprises a guide member configured to control an attitude of the driven member while the driven member moves from the wait position to the appearance position, and that the tilt drive mechanism comprises a contact section with which the driven member come in contact at the one side or the other side in the second direction when the linear drive mechanism further drives the driven member toward the appearance position after the control of the attitude of the driven member by the guide member is released. According to such configuration, when the driven member comes in contact with the contact section, the tip side of the driven member is tilted in the second direction, and therefore the attitude of the driven member can be switched with the use of the linear motion of the driven member. In addition, when tilting the driven member, if a distance of the linear motion is long, the driven member can be largely tilted, etc., and thus the attitude of the driven member can be adjusted.

In the present invention, it is preferable that the driven member comprises a main body section configured to protrude from the frame when the driven member moves to the appearance position, and an interference section configured to protrude from the main body section to the one side or the other side in the second direction and come in contact with the contact section in the inside of the frame. According to such configuration, the attitude of the driven member can be switched with a relatively simple configuration.

In the present invention, it is preferable that the linear drive mechanism comprises a guide shaft fixed to the frame, a second carriage configured to be provided with a guide hole that the guide shaft penetrates through and to linearly move with the driven member in a state where the driven member is swingablly supported in the second direction, and a biasing member configured to be provided between the second carriage and the driven member and to bias the driven member in a direction for coming in contact with the contact section. According to such configuration, according to such configuration, the tilt drive mechanism can be properly operated with a simple configuration.

In the present invention, it is preferable that the guide member comprises a first guide section and a second guide section configured to support the driven member from both sides in the second direction. According to such configuration, the driven member can be linearly moved in a proper attitude.

In the present invention, it is preferable that the guide member comprises a first supporting section a tip side of which is tilted to a side opposite to the second guide section at one side in the first direction of the first guide section. According to such configuration, by the first supporting section, the driven member can be suppressed from being excessively inclined to the first guide section side in the second direction due to external vibrations or the like.

In the present invention, it is preferable that the guide member comprises a second supporting section a tip side of which is tilted to a side opposite to the first guide section at one side in the first direction of the second guide section. According to such configuration, the driven member can be suppressed from being excessively inclined to the first guide section side in the second direction due to external vibrations or the like.

In the present invention, it is preferable that the linear drive mechanism comprises a switching mechanism configured to bring a disconnected state where a mechanistic connection of the driven member and the first carriage is disconnected when the first carriage starts moving to one side in the first direction, and bring a connected state where the driven member and the first carriage are mechanistically connected after the first carriage moves a predetermined distance to one side in the first direction. According to such configuration, even when the first carriage starts moving, the linear motion of the driven member can be delayed. Therefore, when making the driven member appear from the opening to the outside, interference between the driven member and the opening-and-closing member can be suppressed.

In the present invention, it is preferable that the switching mechanism comprises a lever configured to be supported at the first carriage rotatably around an axis line intersecting the first direction, and a cam mechanism configured to switch an attitude of the lever in accordance with a movement of the first carriage in the first direction to achieve the disconnected state and the connected state. According to such configuration, the connection of the driven member and the first carriage can be switched with a relatively simple configuration.

In the present invention, it is preferable that the feed screw comprises a first threaded portion provided with a spiral groove at a first pitch, and a second threaded portion provided with a spiral groove at a second pitch shorter than the first pitch. According to such configuration, in a period when the first carriage engages with the first threaded portion, the first carriage can be moved faster than in a period when engaging with the second threaded portion. In addition, in a period when the first carriage engages with the second threaded portion, the first carriage and the second threaded portion become a state of being self-locked in a state where rotation of the feed screw is stopped. Therefore, the first carriage can be suppressed from moving improperly.

In this case, it is preferable that the feed screw comprises the second threaded portion at both sides in the first direction with respect to the first threaded portion. According to such configuration, in an initial period and a last period of moving operation of the driven member, the driven member is moved at a low speed, and the driven member can be moved at a high speed in an intermediate section.

In the present invention, it is preferable that the opening-and-closing mechanism slides, by the driving force of the drive source, the opening-and-closing member along the second direction from a position at which the opening is in a closed-state, thereby bringing the opening into an opened-state at one side in the second direction with respect to the opening-and-closing member. According to such configuration, the opening-and-closing member does not protrude to a side where the driven member appears. Therefore, the presence of the opening-and-closing member is hardly obstructive.

In the present invention, it is preferable that the opening-and-closing member comprises a first member and a second member, and that in the closed-state, the opening-and-closing mechanism positions the first member to be aligned with the second member at the other side in the second direction, and in the opened-state, moves the second member to the other side in the second direction, and in a state where the second member is overlapped with the first member in the first direction, positions the first member and the second member to take an inclined attitude where ends of one side in the second direction or ends of the other side in the second direction of the first member and the second member are pulled into the frame. According to such configuration, the presence of the opening-and-closing member is hardly obstructive.

In the present invention, an aspect can be employed, in which the opening-and-closing mechanism positions, in the opened-state, the first member and the second member to take an inclined attitude where the ends of one side in the second direction of the first member and the second member are pulled into the frame.

In the present invention, it is preferable that: the opening-and-closing mechanism comprises a holder supported at the frame, at an end of one side in the second direction, rotatably around a first axis line extending in a third direction intersecting the first direction and the second direction, a pinion supported at the holder so as to be movable in the second direction and rotatable around a second axis line extending in the third direction, and a rotary member configured to rotate, around a third axis line extending in the third direction, at a position separated from the first axis line in the first direction and the second direction, by the driving force of the drive source; the first member is provided with a first rack meshing with the pinion and is supported at the holder so as to be movable in the second direction; the second member is provided with a second rack meshing with the pinion and is supported at the holder so as to be movable in the second direction; the rotary member is connected to the first member through a mutually rotatable connecting section; when the rotary member rotates around the third axis line to one side and the connecting section moves in a direction approaching the first axis line, the first member and the second member overlap with each other in the first direction with the pinion sandwiched therebetween, thereby opening the opening; and when the rotary member rotates around the third axis line to other side and the connecting section moves in a direction separating from the first axis line, the first member and the second member are aligned in the second direction with the pinion sandwiched therebetween, thereby bringing the opening into a closed-state.

In the present invention, it is preferable that the opening-and-closing mechanism comprises a gear transmission mechanism configured to transmit the driving force of the drive source to the rotary member, and that the gear transmission mechanism includes a gear provided with teeth in a part in a circumferential direction. According to such configuration, after having the opening-and-closing member perform an opening and closing operation, the driving of the driven member can be continued, whereas the driving of the opening-and-closing member can be stopped.

In the present invention, an aspect can be employed, in which the drive source is a motor capable of outputting bidirectional rotation. In this case, it is preferable that: the motor comprises a first output shaft and a second output shaft that protrude toward an opposite side with each other; the opening-and-closing mechanism is operated by driving force output from the first output shaft; and the linear drive mechanism is operated by driving force output from the second output shaft. According to such configuration, a mechanism for branching and transmitting the output of the motor to the linear drive mechanism and to the opening-and-closing mechanism is unnecessary.

In the present invention, a configuration in which the driven member is a display member that displays an image can be employed.

### [EFFECTS OF THE INVENTION]

In the present invention, when opening and closing of the opening by the opening-and-closing member and the driving of the driven member between the wait position and the wait position are concurrently performed, the opening-and-closing mechanism and the linear drive mechanism use the drive source in common. Therefore, the configuration of the composite drive device can be simplified.

### BRIEF DESCRIPTION OF THE DRAWINGS

FIG. 1 is a perspective view of a composite drive device to which the present invention is applied seen from a front side (other side in a second direction) of a driven member.
FIG. 2 is a perspective view of the composite drive device to which the present invention is applied seen from a back side (one side in the second direction) of the driven member.
FIG. 3 is a perspective view of an opening-and-closing mechanism, a linear drive mechanism, and the like of the composite drive device to which the present invention is applied seen from one side in a third direction.
FIG. 4 is a perspective view of the opening-and-closing mechanism of the composite drive device to which the present invention is applied seen from the one side in the third direction.
FIG. 5 is an exploded perspective view of an opening-and-closing member and the like of the composite drive device to which the present invention is applied.
FIG. 6 is an explanatory view of a pinion and the like used in the opening-and-closing mechanism of the composite drive device to which the present invention is applied.
FIG. 7 is an explanatory view showing an operation of the opening-and-closing mechanism of the composite drive device to which the present invention is applied.
FIG. 8 is a perspective view of the linear drive mechanism and a tilt drive mechanism of the composite drive device to which the present invention is applied seen from the one side in the third direction.
FIG. 9 is an exploded perspective view of the linear drive mechanism of the composite drive device to which the present invention is applied.
FIG. 10 is an explanatory view of a switching mechanism and the tilt drive mechanism of the composite drive device to which the present invention is applied.
FIG. 11 is an explanatory view showing an operation of the switching mechanism of the composite drive device to which the present invention is applied.
FIG. 12 is an explanatory view showing the operation of the tilt drive mechanism of the composite drive device to which the present invention is applied.
FIG. 13 is an explanatory view of a feed screw of the composite drive device to which the present invention is applied.
FIG. 14 is an explanatory view showing another configuration example of the feed screw of the composite drive device to which the present invention is applied.
FIG. 15 is a timing chart showing an operation of the composite drive device to which the present invention is applied.

### DESCRIPTION OF EMBODIMENTS

An embodiment of the present invention will be described with reference to the drawings. In addition, in the following descriptions, a direction along a linear motion direction of a driven member is set to be a first direction Y, and two directions intersecting the first direction Y are set to be a second direction Z and a third direction X, respectively. Moreover, a direction in which an opening-and-closing member slides is set to be the second direction Z. The description is provided with one side of the first direction Y marked with Y1, the other side marked with Y2, one side of the second direction Z marked with Z1, the other side marked with Z2, one side of the third direction X marked with X1, and the other side marked with X2.

In addition, the drive device of this embodiment is a composite drive device which performs opening and closing operation of an opening by the opening-and-closing member and taking in and out of a display member (driven member) through the opening. In such composite drive device, the first direction Y is an up and down direction, the second direction Z is an anteroposterior direction, and the third direction X is a lateral direction.

### (Overall Configuration)

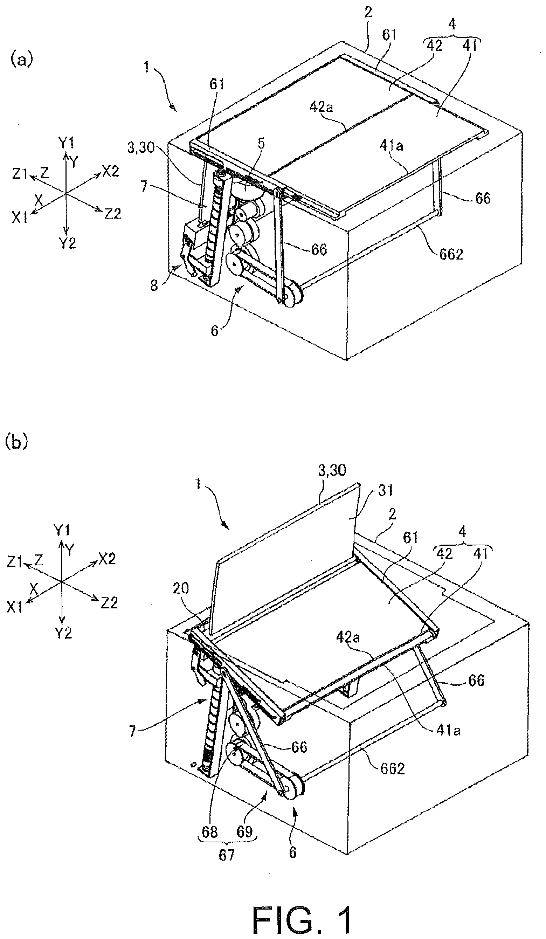

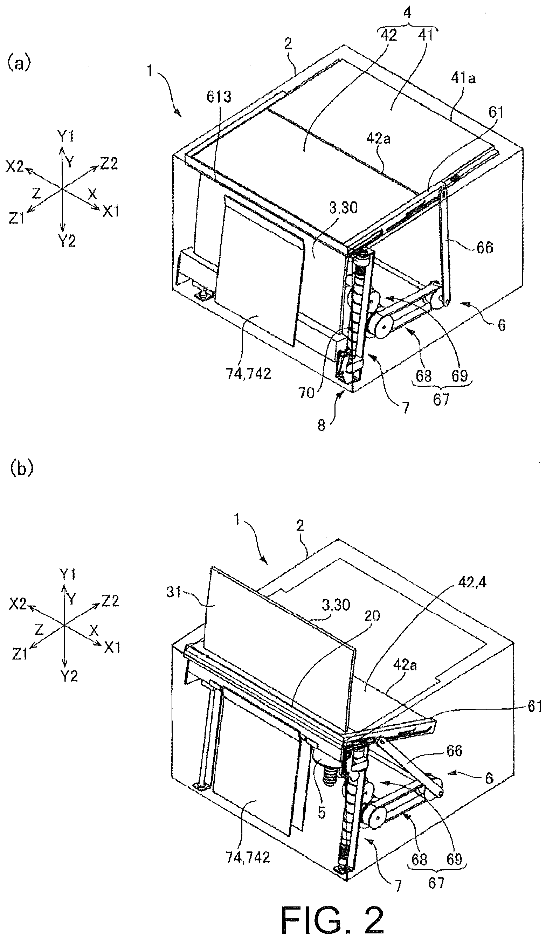

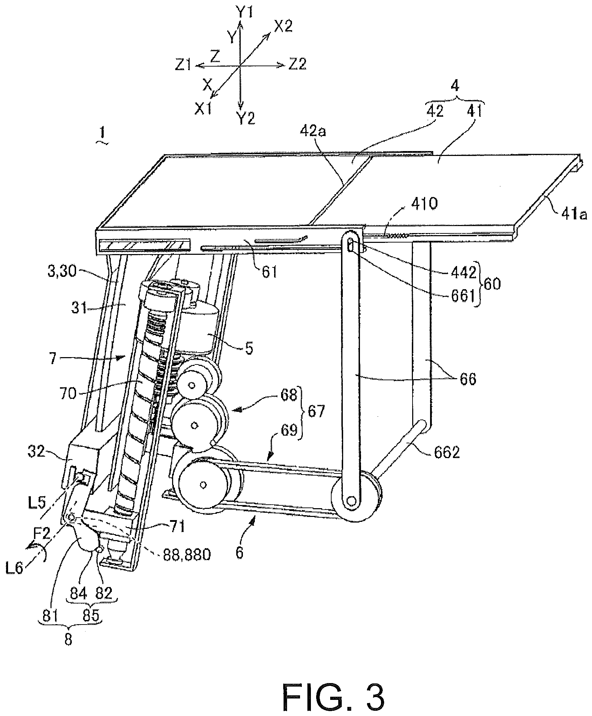

FIG. 1 is a perspective view of a composite drive device 1 to which the present invention is applied seen from a front side (other side Z2 in the second direction Z) of a driven member 3, and FIG. 1(a) is an explanatory view of a state where the driven member 3 is at a wait position of inside of a frame 2, and FIG. 1(b) is an explanatory view of a state where the driven member 3 is at an appearance position of outside of the frame 2, respectively. FIG. 2 is a perspective view of the composite drive device 1 to which the present invention is applied seen from a back side (one side Z1 in the second direction Z) of the driven member 3, and FIG. 2(a) is an explanatory view of the state where the driven member 3 is at the wait position of the inside of the frame 2, and FIG. 2(b) is an explanatory view of a state where the driven member 3 is at the appearance position of the outside of the frame 2, respectively. FIG. 3 is a perspective view of an opening-and-closing mechanism 6, a linear drive mechanism 7 and the like of the composite drive device 1 to which the present invention is applied seen from one side X1 in the third direction X. In addition, in FIG. 1 and FIG. 2, with regard to the frame 2, only an outline thereof is schematically illustrated in such a manner that a configuration of the inside of the frame 2 can be easily understood.

The composite drive device 1 shown in FIG. 1 and FIG. 2 has the frame 2 provided with an opening 20 that opens toward one side Y1 in the first direction Y, the driven member 3 located in the inside of the frame 2 and an opening-and-closing member 4 that closes the opening 20. The frame 2 is rectangular box-shaped. The driven member 3 is a display member 30 that displays an image toward the one side Z1 or the other side Z2 in the second direction Z. The display member 30 is configured as, for example, a display panel of a direct-view-type display device and a virtual image display device. In this embodiment, the display member 30 displays an image toward the other side Z2 in the second direction Z.

As shown in FIG. 1, FIG. 2 and FIG. 3, the composite drive device 1 has a motor 50 as a drive source 5, the opening-and-closing mechanism 6 that drives the opening-and-closing member 4 by the driving force of the motor 50 to open and close the opening 20, and the linear drive mechanism 7 that linearly moves the driven member 3 to the one side Y1 and the other side Y2 in the first direction Y by the driving force of the motor 50. The motor 50 can output bidirectional rotation. As described later, the opening-and-closing mechanism 6 slides the opening-and-closing member 4 along the second direction Z from a position at which the opening 20 is in a closed-state, thereby bringing the opening 20 into an opened-state at the one side Z1 in the second direction Z with respect to the opening-and-closing member 4. As described later, the linear drive mechanism 7 moves the driven member 3 between an appearance position protruded to the outside from the opening 20 (see FIG. 1(b) and FIG. 2(b)) and a wait position retracted to the inside from the opening 20 (see FIG. 1(a) and FIG. 2(a)).

### (Configuration of Opening-and-Closing Mechanism)

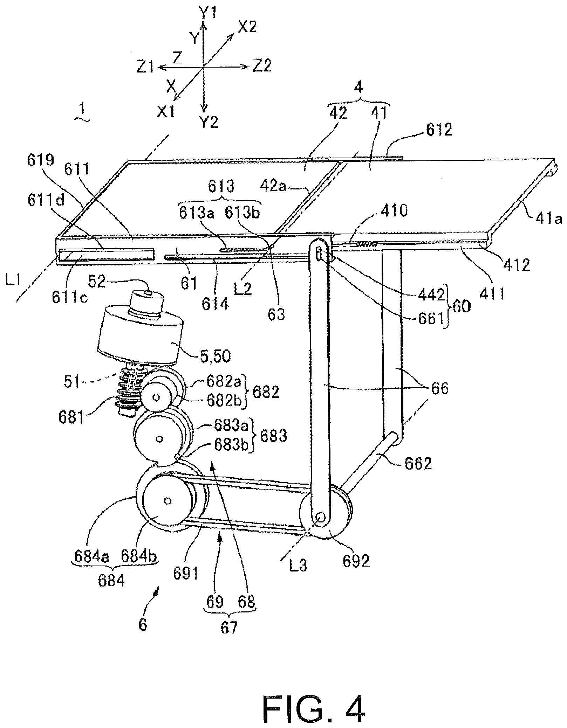

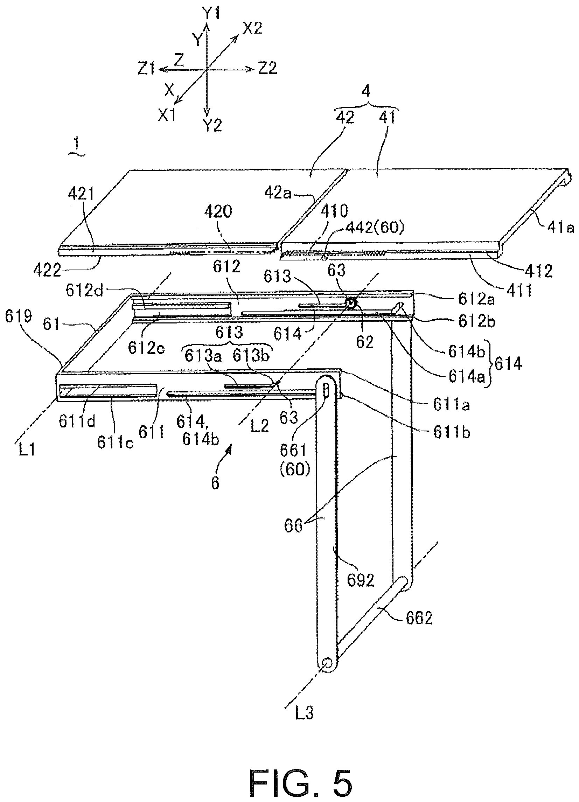

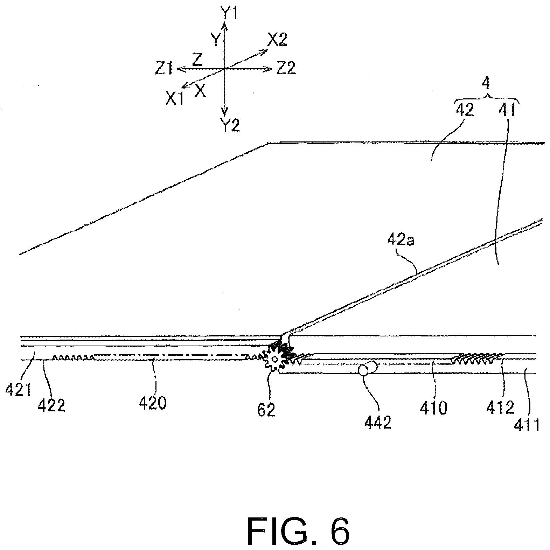

FIG. 4 is a perspective view of the opening-and-closing mechanism 6 of the composite drive device 1 to which the present invention is applied seen from the one side X1 in the third direction X. FIG. 5 is an exploded perspective view of the opening-and-closing member 4 and the like of the composite drive device 1 to which the present invention is applied. FIG. 6 is an explanatory view of a pinion 62 and the like used in the opening-and-closing mechanism 6 of the composite drive device 1 to which the present invention is applied. In addition, in FIG. 3, FIG. 4, FIG. 5 and FIG. 6, only a part of teeth of a first rack 410 and teeth of a second rack 420 is shown, and an area where the first rack 410 and the second rack 420 are formed is indicated by a dashed line.

As shown in FIG. 4, FIG. 5 and FIG. 6, the opening-and-closing member 4 is provided with a first member 41 and a second member 42, and the opening-and-closing mechanism 6 has a holder 61 that movably supports the first member 41 and the second member 42 in the second direction Z. Both of the first member 41 and the second member 42 are plate-shaped members thickness directions of which are directed to the first direction. The holder 61 has a pair of side plate sections 611, 612 facing each other in the third direction X and a connection plate section 619 that connects to the end of the side plate sections 611, 612 in the one side Z1 in the second direction Z.

The ends of both sides in the first direction Y of the side plate section 611 are bent toward the side plate section 612 side to constitute support plate sections 611a, 611b that extend in the second direction Z, and the ends of both sides in the first direction Y of side plate section 612 are bent toward the side plate section 611 side to constitute support plate sections 612a, 612b that extend in the second direction Z. In the side plate section 611, a hole 611c extending in the second direction Z is formed at the one side Z1 in the second direction Z, and a support plate section 611d that is bent toward the side plate section 612 is formed from an edge of the one side Y1 in the first direction Y of the hole 611c. In the side plate section 612, a hole 612c extending in the second direction Z is formed at the one side Z1 in the second direction Z, and a support plate section 612d that is bent toward the side plate section 611 is formed from an edge of the one side Y1 in the first direction Y of the hole 612c.

Therefore, with regard to the second member 42, the both ends in the third direction X are movably supported in the second direction Z between the support plate sections 611a, 612a and the support plate sections 611d, 612d. In addition, with regard to the first member 41, the both ends in the third direction X are movably arranged in the second direction Z between the support plate sections 611a, 612a and the support plate sections 611b, 612b.

The holder 61 configured in this manner is supported at the frame 2, at an end of the one side Z1 in the second direction Z, rotatably around a first axis line L1 extending in the third direction X. In addition, the opening-and-closing mechanism 6 is provided with: a pinion 62 that is supported at the side plate sections 611, 612 of the holder 61 rotatably around a second axis line L2 extending in the third direction X; and a rotary member 66 that rotates, around a third axis line L3 extending in the third direction X, at a position separated from the first axis line L1 at the other side Y2 in the first direction Y and at the other direction Z2 in the second direction Z. In this embodiment, a pair of the pinion 62 and the rotary member 66 is provided being separated from each other in the third direction X.

In the holder 61, a first slit 613 extending in the second direction Z is formed in each of the side plate sections 611, 612 facing each other in the third direction X. The first slit 613 has a first portion 613a extending in the second direction Z and a second portion 613b extending obliquely, from an end of the other side Z2 in the second direction Z of the first portion 613a, toward the one side Y1 in the first direction Y.

A support shaft 63 that rotatably supports the pinion 62 is fitted in the first slit 613, and the support shaft 63 is movable in the second direction Z along the first slit 613. Therefore, the pinion 62 is supported at the holder 61 movably in the second direction Z.

The rotary member 66 is an arm that extends to a side surface 411 of the first member 41 from a position at which the third axis line L3 passes through, and an elongate hole 661 extending along the extending direction of the rotary member 66 is formed at a tip side of the rotary member 66. In the holder 61, a second slit 614 extending in the second direction Z is formed in each of the side plate sections 611, 612, and a shaft 442 provided in the side surface 411 of the first member 41 penetrates through the second slit 614 and fits in the elongate hole 661. Therefore, the shaft 442 and the elongate hole 661 constitute a connecting section 60 that connects the rotary member 66 and the first member 41 so as to be mutually rotatable. Here, the second slit 614 has a first portion 614a extending in the second direction Z and a second portion 614b extending obliquely, from the end of the other side Z2 in second direction Z of the first portion 614a, toward the one side Y1 in the first direction Y.

Two rotary members 66 facing each other in the third direction X are connected by a connecting shaft 662 and rotate integrally. Out of the two rotary members 66, the rotary member 66 at the one side X1 in the third direction X and the drive source 5 (motor 50) are mechanistically connected via a transmission mechanism 67. In this embodiment, the transmission mechanism 67 is provided with a gear transmission mechanism 68 and a belt transmission mechanism 69.

The motor 50 is fixed to the frame 2, with a motor shaft line being directed to a direction along the first direction Y, and has a first output shaft 51 protruded to the one side Y1 in the first direction Y and a second output shaft 52 protruded to the other side Y2 in the first direction (see FIG. 4). The gear transmission mechanism 68 has a first gear 681 composed of a worm fixed to the first output shaft 51, a second gear 682, a third gear 683, and a forth gear 684. The second gear 682 is a composite gear in which a worm wheel 682a meshing with the first gear 681 and a gear 682b having a diameter smaller than that of the worm wheel 682a are formed in an integrated manner. The third gear 683 is a composite gear in which a gear 683a meshing with the gear 682 and a gear 683b provided with teeth only in a predetermined angular range in a circumferential direction are formed in an integrated manner. The forth gear 684 is a composite gear in which a gear 684a meshing with the gear 683b and a pulley 684b are formed in an integrated manner.

Out of the two rotary members 66, the rotary member 66 at the one side X1 in the third direction X is connected to a pulley 692. A belt 691 is bridged over the pulleys 684b, 692, and the belt transmission mechanism 69 is constituted by the pulleys 684b, 692 and the belt 691.

### (Detailed Configuration of Opening-and-Closing Member 4)

In the first member 41, a stepped portion 412 directed to the one side Y1 in the first direction Y is formed in the side surface 411, and in the stepped portion 412, a first rack 410 is consecutively provided, from an end directed to the one side Z1 in the second direction Z, to an intermediate position in a surface directed to the one side Y1 in the first direction Y. In the second member 42, a stepped portion 422 directed to the other side Y2 in the first direction Y is formed in the side surface 421, and in the stepped portion 422, a second rack 420 is consecutively provided, from an end directed to other side Z2 in the second direction Z, to an intermediate position in a surface directed to the other side Y2 in the first direction Y. The first rack 410 and the second rack 420 mesh with the pinion 62 mutually from the opposite side of the pinion 62.

### (Opening and Closing Operation)

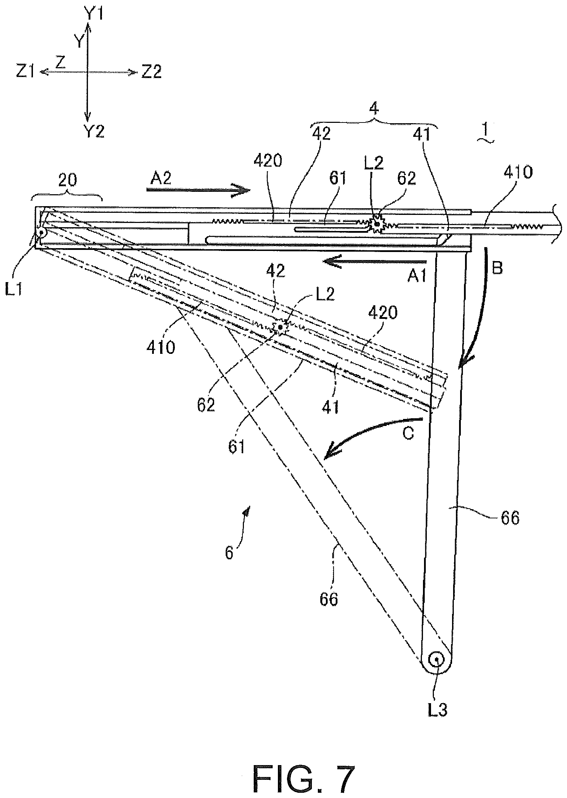

FIG. 7 is an explanatory view showing an operation of opening-and-closing mechanism 6 of the composite drive device 1 to which the present invention is applied. In addition, in FIG. 7, a position of the opening-and-closing member 4 or the like in the closed-state is indicated by a solid line, and a position of the opening-and-closing member 4 or the like in an opened-state is indicated by a dashed line.

As shown in FIG. 7, in the closed-state where the opening 20 of the frame 2 is closed by the opening-and-closing member 4, the arm-shaped rotary member 66 is in a standing state toward the one side Y1 in the first direction Y, and in this state, in the opening-and-closing member 4, the first member 41 is in a state of being aligned with the second member 42 at the other side Z2 in the second direction Z. In such closed-state, the pinion 62 is positioned at the second portion 613b of the first slit 613. In addition, the pinion 62 is between the first member 41 and the second member 42 in the second direction Z. Consequently, within the first rack 410, in the stepped portion 412, a portion formed in an end directed to the one side Z1 in the second direction Z meshes with the pinion 62 from the other side Z2 in the second direction Z, and within the second rack 420, in the stepped portion 422, a portion formed in an end directed to the other side Z2 in the second direction meshes with the pinion 62 from the one side Z1 in the second direction Z.

When the motor 50 rotates in one direction from this state, rotary drive force of the motor 50 is transmitted to the rotary member 66 through the transmission mechanism 67 (the gear transmission mechanism 68 and the belt transmission mechanism 69) shown in FIG. 4 and the like. Therefore, the rotary member 66 rotates around the third axis line L3 in one direction indicated by an arrow C, and the connecting section 60 of the rotary member 66 and the first member 41 rotates around the third axis line L3 in one direction indicated by the arrow C. Consequently, the shaft 442 of the connecting section 60 moves along the second slit 614 in a direction approaching the first axis line L1. Therefore, the first member 41 moves in the direction approaching the first axis line L1 as indicated by an arrow A1 while being supported by the holder 61. As a result, the holder 61 rotates around the first axis line L1 in a direction indicated by an arrow B. In doing so, the pinion 62 runs on the first rack 410 while rotating around the second axis line L2, and a meshing position of the pinion 62 and the first rack 410 moves to the other side Z2 in the second direction Z of the first rack 410. In addition, by the rotation of the pinion 62, the second rack 420 runs on the pinion 62 at a side opposite to the first rack 410, and a meshing position of the pinion 62 and the second rack 420 moves to the one side Z1 in the second direction Z of the second rack 420. Therefore, the second member 42 moves to the other side Z2 in the second direction Z as indicated by an arrow A2 and overlaps with, the first member 41 at the one side Y1 in the first direction Y, with the pinion 62 sandwiched therebetween. In such state, the first member 41 and the second member 42 take an inclined attitude where the ends 41a, 42a of the other side Z2 in the second direction Z are pulled into the frame 2. In addition, at least at the one side Z1 in the second direction Z of the second member 42 (the one side Z1 in the second direction Z of the opening-and-closing member 4), the opening 20 opens and becomes the opened-state. In this embodiment, although the opening of the frame 2 becomes an opened-state also at the other side Z1 in the second direction Z of the opening-and-closing member 4, such opening is not used for taking in and out of the driven member 3.

When the motor 50 rotates in other direction from such opened-state, and the rotary drive force of the motor 50 is transmitted to the rotary member 66 through the transmission mechanism 67 (the gear transmission mechanism 68 and the belt transmission mechanism 69) of the opening-and-closing mechanism 6, the rotary member 66 rotates around the third axis line L3 in other direction opposite to the one direction indicated by the arrow C, and the connecting section 60 of the rotary member 66 and the first member 41 rotates around the third axis line L3 in the other direction opposite to the one direction indicated by the arrow C. Consequently, the connecting section 60 moves along the second slit 614 in a direction separating from the first axis line L1. Therefore, as a result of the operation opposite to the abovementioned operation being performed, the second member 42 moves to the one side Z1 in the second direction Z, and thus the opening 20 becomes the closed-state being closed by the opening-and-closing member 4 at the one side Z1 in the second direction Z of the second member 42 (the one side Z1 in the second direction Z of the opening-and-closing member 4).

### (Configuration of Driven Member 3)

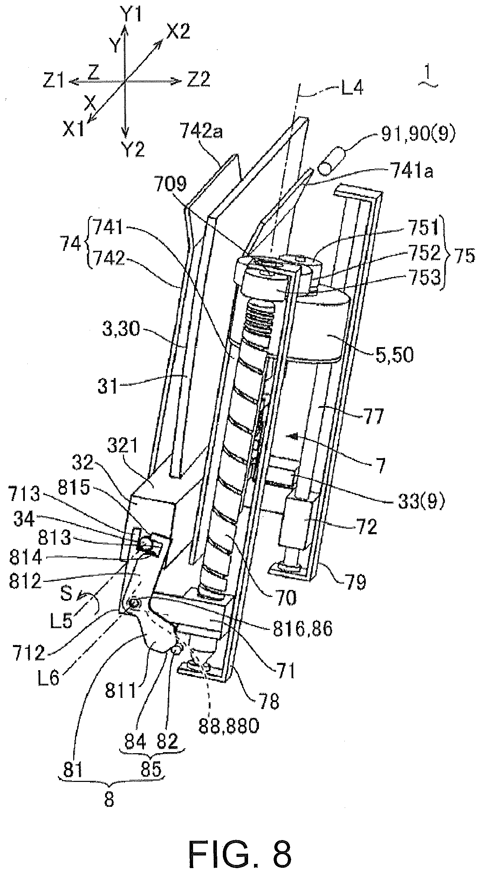

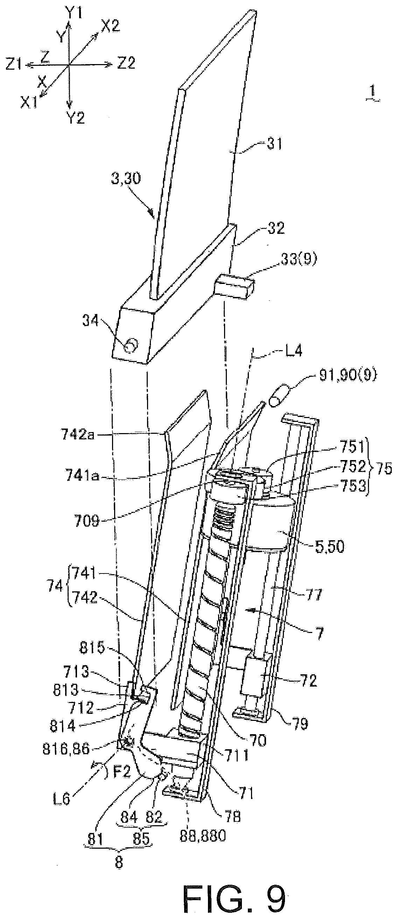

FIG. 8 is a perspective view of the linear drive mechanism 7 and a tilt drive mechanism 9 of the composite drive device 1 to which the present invention is applied seen from the one side X1 in the third direction X. FIG. 9 is an exploded perspective view of the linear drive mechanism 7 of the composite drive device 1 to which the present invention is applied.

As shown in FIG. 3, FIG. 8 and FIG. 9, the driven member 3 has a main body section 31 that protrudes from the frame 2 when the driven member 3 moves to the appearance position and a base 32 that holds the end of the other side Y2 in the first direction Y of the main body section 31. The main body section 31 has a panel-like form thickness direction of which is directed to the second direction Z. In the base 32, a dimension of the third direction X is larger than that of the main body section 31, and a dimension of the second direction Z is larger than that of the main body section 31.

### (Configuration of Linear Drive Mechanism 7)

The linear drive mechanism 7 has a feed screw 70 that rotates around an axis line L4 extending in the first direction Y and a first carriage 71 that engages with the feed screw 70, and the first carriage 71 moves to the one side Y1 in the first direction Y when the driven member 3 is moved from the wait position to the appearance position. In this embodiment, both ends of the feed screw 70 are rotatably supported by a supporting member 78 supported at the frame 2. The linear drive mechanism 7 has a gear transmission mechanism 75 composed of a first gear 751 fixed to the second output shaft 52 of the motor 50, a second gear 752 meshing with the first gear 751 and a third gear 753 meshing with the second gear 752. The third gear 753 is fixed to an end 709 of the feed screw 70. Therefore, the feed screw 70 rotates around the axis line L4 by the driving force of the motor 50.

The linear drive mechanism 7 has a guide member 74 that controls an attitude of the driven member 3 while the driven member 3 moves from the wait position to the appearance position. In this embodiment, the guide member 74 has a pair of plate-like guide sections facing each other in the second direction Z, and the driven member 3 is arranged between the pair of guide sections. Consequently, of the pair of guide sections, a first guide section 741 located at the other side Z2 in the second direction Z comes in contact with the driven member 3 from the other side Z2 in the second direction Z, and a second guide section 742 located at the one side Z1 in the second direction Z comes in contact with the driven member 3 from the one side Z1 in the second direction Z.

In this embodiment, the guide member 74 has a first supporting section 741a a tip side of which is tilted to the other side Z2 in the second direction Z (side opposite to the second guide section 742) at the one side Y1 in the first direction Y of the first guide section 741 and a second supporting section 742a a tip side of which is tilted to the one side Z1 in the second direction Z (side opposite to the first guide section 741) at the one side Y1 in the first direction Y of the second guide section 742.

The linear drive mechanism 7 has a guide shaft 77 extending in the first direction Y, and the guide shaft 77 is supported at the frame 2 through a supporting member 79. The linear drive mechanism 7 has a second carriage 72 in which a guide hole 725 that the guide shaft 77 penetrates through is formed. The second carriage 72 has a cylinder section 721 in which the guide hole 725 is formed and an L-shaped connection plate section 722 that overlaps with from the cylinder section 721 to the base 32 of the driven member 3 from the other side X2 in the third direction X. The connection plate section 722 is formed with a circular hole 723, and a round bar-shaped shaft section (not shown) that protrudes from the base 32 of the driven member 3 to the other side X2 in the third direction X is fitted into the hole 723.

Therefore, the second carriage 72 and the driven member 3 are integrally movable to the first direction Y, and the driven member 3 can rotate around the axis line L5 that passes through a center of the abovementioned shaft section with respect to the second carriage 72. Here, as indicated by an arrow S, a biasing member 76 (second biasing member) that biases the driven member 3 at one side around the axis line L5 with respect to the second carriage 72 is provided between the driven member 3 and the second carriage 72. In this embodiment, the biasing member 76 is a torsion coil spring 760, and each of both ends thereof is held by the driven member 3 and the second carriage 72. Such biasing member 76 generates, in the tilt drive mechanism 9 described later, a biasing force in a direction where the driven member 3 is brought into contact with a contact section 90.

### (Switching Mechanism 8)

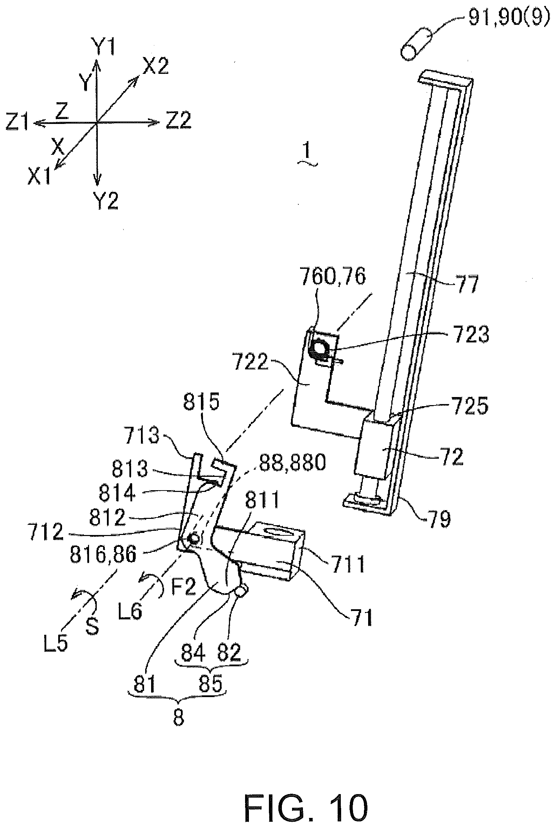

FIG. 10 is an explanatory view of a switching mechanism 8 and the tilt drive mechanism 9 of the composite drive device 1 to which the present invention is applied. In this embodiment, the linear drive mechanism 7 has a switching mechanism 8. The switching mechanism 8 brings a disconnected state where a mechanistic connection of the driven member 3 and the first carriage 71 is disconnected when the first carriage 71 starts moving to the one side Y1 in the first direction Y, and brings a connected state where the driven member 3 and the first carriage 71 are mechanistically connected after the first carriage 71 moves a predetermined distance to the one side Y1 in the first direction Y.

In this embodiment, the switching mechanism 8 has a lever 81 that is supported at the first carriage 71 rotatably around an axis line L6 extending in the third direction X and a cam mechanism 85 that switches an attitude of the lever 81 in accordance with a movement of the first carriage 71 in the first direction Y to achieve the disconnected state and the connected state.

In this embodiment, the first carriage 72 has an engaging section 711 that engages with the feed screw 70, an L-shaped connection plate section 712 that overlaps with from the engaging section 711 to the base 32 of the driven member 3 from the one side X1 in the third direction X, and a convex section 713 that protrudes from an end of the one side Z1 in the second direction Z of the connection plate section 712 to the one side Y1 in the first direction Y. The connection plate section 712 is formed with a circular hole (not shown) at a position at which the axis line L6 gets through, and the lever 81 is also formed with a circular hole 816 at a position at which the axis line L6 gets through. A round bar-shaped shaft section 86 is fitted into the abovementioned hole of the connection plate section 712 and the hole 816 of the lever 81. Therefore, the first carriage 71 and the lever 81 are integrally movable in the first direction Y and the lever 81 can rotate around an axis line L6 that passes through a center of the abovementioned shaft section 86 with respect to the first carriage 71. In addition, between the lever 81 and the first carriage 71, as indicated by an arrow F2, a biasing member 88 (second biasing member) that biases the lever 81 around the axis line L6 with respect to the first carriage 71 as indicated by the arrow F2 is provided. In this embodiment, the biasing member 88 is a torsion coil spring 880.

The lever 81 has a first plate section 811 extending from a position at which the hole 816 is formed to the other side Y2 in the first direction Y and a second plate section 812 extending from the position at which the hole 816 is formed to the one side Y1 in the first direction Y. An edge of first plate section 811 is a cam surface 84, whereas a round bar-shaped cam pin 82 is fixed to the frame 2 in the vicinity of the cam surface 84. In this embodiment, the cam surface 84 and the cam pin 82 constitute a cam mechanism 85 that controls the attitude around the axis line L6 of the lever 81.

The second plate section 812 of the lever 81 is formed with, a notch-shaped concave section 813 that is recessed from an edge of the one side Z1 to the other side Z2 in the second direction Z, at a position facing the convex section 713 of the first carriage 72. Therefore, the second plate section 812 of the lever 81 is formed with a first contact section 814 composed of an edge of the other side Y2 in the first direction Y of the concave section 813 and a second contact section 815 composed of an edge of the one side Y1 in the first direction Y of the concave section 813. In addition, a round bar-shaped engaging shaft 34 protrudes from the base 32 of the driven member 3 to the one side X1 in the third direction X.

### (Operation of Switching Mechanism 8)

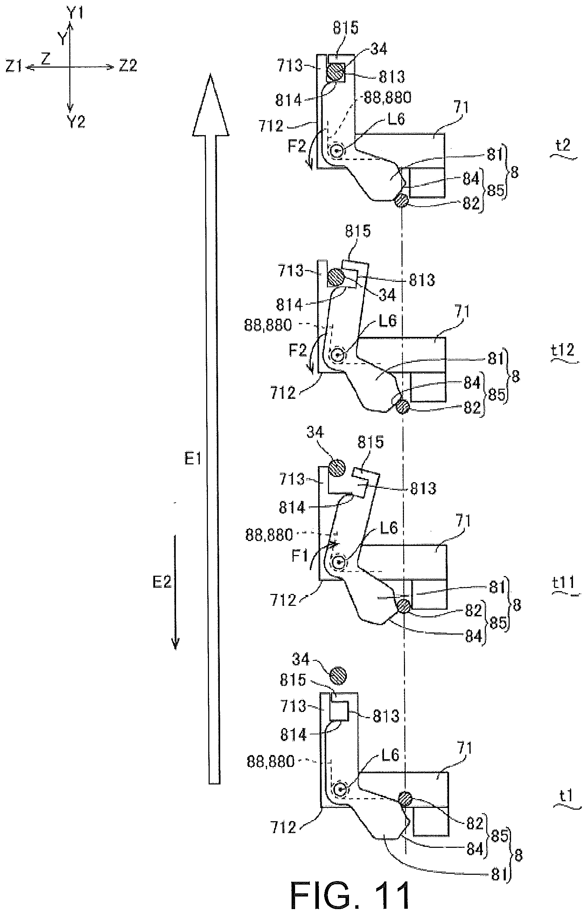

FIG. 11 is an explanatory view showing an operation of the switching mechanism 8 of the composite drive device 1 to which the present invention is applied. In addition, FIG. 11 illustrates an aspect in which the attitude of the lever 81 is switched as the first carriage 71 moves to the one side Y1 in the first direction Y as indicated by arrows E1, E2.

First, at a time t1 shown in FIG. 11, when the driven member 3 is at the wait position, the first carriage 71 and the lever 81 are at the other side Y2 in the first direction Y with respect to the engaging shaft 34 of the driven member 3, and the lever 81 and the engaging shaft 34 do not engage with each other. Therefore, the driven member 3 and the first carriage 71 are in the disconnected state where the mechanistic connection thereof is disconnected.

Next, at a time t11 shown in FIG. 11, when the motor 50 rotates in one direction, and the feed screw 70 rotates in one direction, the first carriage 71 moves to the one side Y1 in the first direction Y as indicated by an arrow E1. As a result, the cam surface 84 of the lever 81 is pressed onto the cam pin 82 and the lever 81 rotates around the axis line L6 in one direction as indicated by an arrow F1 and takes an inclined attitude.

Moreover, at a time t12 shown in FIG. 11, when the first carriage 71 moves to the one side Y1 in the first direction Y, the lever 81 is gradually released from the control of the attitude by the cam pin 82, and starts rotating around the axis line L6 in other direction by the biasing force of the biasing member 88 as indicated by the arrow F2. Furthermore, at a time t2 shown in FIG. 11, as indicated by the arrow F2, the lever 81 further rotates around the axis line L6 in the other direction, and the engaging shaft 34 comes into the inside of the concave section 813 from the open end side of the concave section 813. As a result, the first contact section 814 is positioned at the other side Y2 in the first direction Y with respect to the engaging shaft 34, a second contact section 815 is positioned at the one side Y1 in the first direction Y with respect to the engaging shaft 34, and the lever 81 and the driven member 3 become in a state of being engaged with each other at both of the one side Y1 and the other side Y2 in the first direction Y. Such state is a connected state where the driven member 3 and the first carriage 71 are mechanistically connected and integrally movable. In such connected state, when the first carriage 71 further moves to the one side Y1 in the first direction Y, the engaging shaft 34 is pressed onto the one side Y1 in the first direction Y by the first contact section 814 of the lever 81, and thus the driven member 3 moves together with the first carriage 71 to the one side Y1 in the first direction Y, and appears from the opening 20 of the frame 2. In this state, the open end side of the concave section 813 of the lever 81 is closed by the convex section 713 of the first carriage 71. Therefore, the convex section 713 functions as a convex section for preventing slip-off of the engaging shaft 34 from the concave section 813 of the lever 81.

Contrarily to the abovementioned operation, when the motor 50 rotates in other direction, the first carriage 71 moves to the other side Y2 in the first direction Y as indicated by an arrow E2. As a result, the engaging shaft 34 of the driven member 3 is pressed onto to the other side Y2 in the first direction Y by the second contact section 815 of the lever 81, and thus the driven member 3 moves together with the first carriage 71 to the other side Y2 in the first direction Y, and comes back to the inside of the frame 2 from the opening 20 of the frame 2. In the middle of the movement, the attitude of the lever 81 is switched by the cam mechanism 85 and the connection of the driven member 3 and the first carriage 71 is disconnected.

### (Configuration of Tilt Drive Mechanism 9)

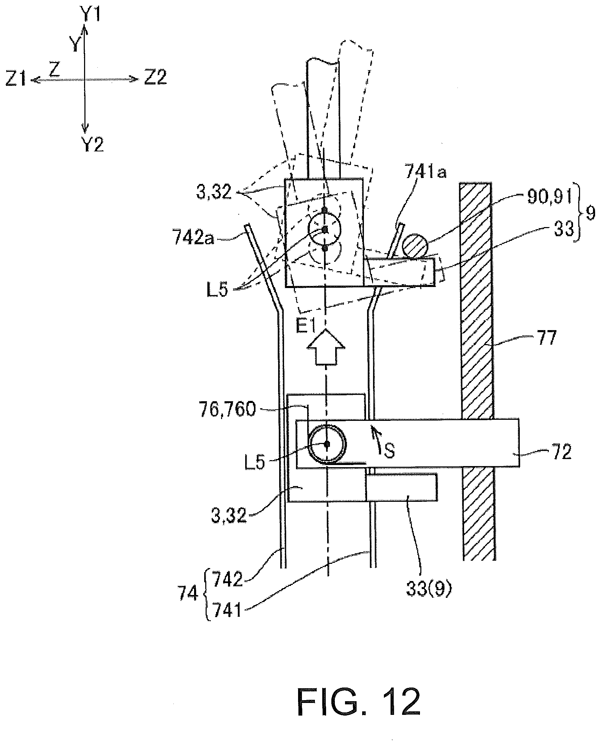

FIG. 12 is an explanatory view of an operation of the tilt drive mechanism 9 of the composite drive device 1 to which the present invention is applied. As shown in FIG. 8 and the like, a shaft 91 is disposed near the end of one side Z1 in the first direction Y of the guide member 74, and the shaft 91 is fixed to the frame 2. In this embodiment, the shaft 91 functions as the contact section 90 of the tilt drive mechanism 9 that tilts, the tip side of the driven member 3 having reached the appearance position, to the one side Z1 or the other side Z2 in the second direction Z, by the driving force of the drive source 5. In this embodiment, since the attitude of the driven member 3 is controlled by the guide member 74, the tilt drive mechanism 9 tilts, the tip side of the driven member 3 in the second direction Z, in the appearance position, after the control the attitude of the driven member 3 by the guide member 74 is released.

In this embodiment, a shaft 91 is disposed at the other side Z2 in the second direction Z of the guide member 74. In addition, an interference section 33 that protrudes to the other side Z2 in the second direction Z from the main body section 31 is provided in the base 32 of the driven member 3. Therefore, as described hereinafter with reference to FIG. 12, when the interference section 33 comes in contact with the contact section 90 from the other side Y2 in the first direction Y, the tip side of the driven member 3 tilts to the other side Z2 in the second direction Z around the axis line L5.

As shown in FIG. 12, with regard to the driven member 3, the base 32 is swingablly supported at the first carriage 71 and the second carriage 72 around the axis line L5. In addition, the biasing member 76 that has been described with reference to FIG. 10 biases the driven member 3 around the axis line L5 in a direction indicated by the arrow S. Therefore, as indicated by a dashed line in FIG. 12, although the tip side of the driven member 3 attempts to tilt to the one side Z1 in the second direction Z around the axis line L5, the attitude of the driven member 3 is controlled by the guide member 74 as indicated by a solid line in FIG. 12.

Moreover, as indicated by the arrow E1, when the driven member 3 moves to the one side Y1 in the first direction Y and the control of the attitude of the driven member 3 by the guide member 74 is released, the tip side of the driven member 3 first tilts to the one side Z1 in the second direction Z around the axis line L5 as indicated by a dashed line in FIG. 12.

Furthermore, when the driven member 3 further moves to the one side Y1 in the first direction Y, the interference section 33 comes in contact with the contact section 90 from the other side Y2 in the first direction Y. After the driven member 3 takes the attitude indicated by a solid line in FIG. 12, the tip side of the driven member 3 tilts to the other side Z2 in the second direction Z around the axis line L5 as indicated by a dotted line in FIG. 12. Here, the biasing member 76 biases the driven member 3 in a direction where the interference section 33 comes in contact with the contact section 90, and thus the tip side of the driven member 3 tilts to the other side Z2 in the second direction Z against the biasing force of the biasing member 76. In addition, in this embodiment, when tilting the driven member 3, if a distance of the linear motion is long, the driven member 3 can be largely tilted, etc., and thus the attitude of the driven member 3 can be easily adjusted. Even in this case, the position of the first direction Y of the driven member 3 does not change greatly and thus a change in the position of the first direction Y of the driven member 3 can be ignored. In addition, as an alternative to the biasing member 76, a biasing member that biases in a direction where the interference section 33 of the driven member 3 comes in contact with the contact section 90 may be provided between the first carriage 71 and the driven member 3.

### (Configuration of Feed Screw 70)

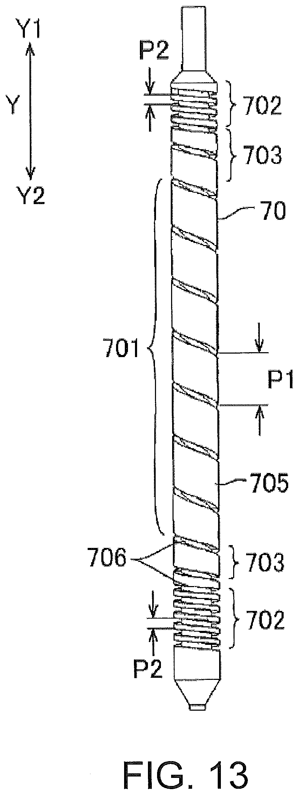

FIG. 13 is an explanatory view of the feed screw 70 of the composite drive device 1 to which the present invention is applied. As shown in FIG. 13, the feed screw 70 used in the linear drive mechanism 7 is formed with a spiral groove 706 at an outer peripheral surface of a round bar-shaped shaft body 705. Here, the feed screw 70 has a first threaded portion 701 provided with the spiral groove 706 at a first pitch PI, a second threaded portion 702 provided with the spiral groove 706 at a second pitch P2 shorter than the first pitch PI, and a boundary portion 703 between the first threaded portion 701 and the second threaded portion 702, and in the boundary portion 703, intervals of grooves vary continuously in a circumferential direction. Consequently, the engaging section 711 of the first carriage 71 has a section (not shown) engaging with the spiral groove 706 in one place.

In this embodiment, the feed screw 70 has the second threaded portion 702 at both sides in the first direction Y with respect to the first threaded portion 701. The second threaded portion 702 is a part that drives the first carriage 71 in an initial period and a last period when the driven member 3 is moved from the wait position to the appearance position, and the first threaded portion 701 is a part that drives the first carriage 71 in an intermediate period when the driven member 3 is moved from the wait position to the appearance position.

### (Another Configuration Example of Feed Screw 70)

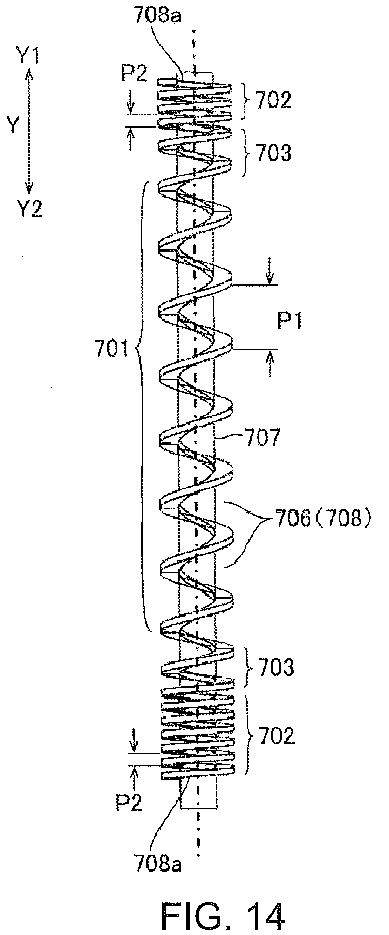

FIG. 14 is an explanatory view showing another configuration example of the feed screw 70 of the composite drive device 1 to which the present invention is applied. Also, in the feed screw 70 shown in FIG. 14, as is the case with the feed screw 70 that has been described with reference to FIG. 13, the periphery side of the round bar-shaped shaft body 707 is provided with the spiral groove 706. The feed screw 70 has a first threaded portion 701 provided with the spiral groove 706 at a first pitch PI, a second threaded portion 702 provided with the spiral groove 706 at a second pitch P2 shorter than the first pitch PI, and a boundary portion 703 between the first threaded portion 701 and the second threaded portion 702, and in the boundary portion 703, intervals of grooves vary continuously in a circumferential direction. Consequently, the engaging section 711 of the first carriage 71 has a section (not shown) engaging with the spiral groove 706 in one area. The feed screw 70 has the second threaded portion 702 at both sides in the first direction Y with respect to the first threaded portion 701.

In this embodiment, the spiral groove 706 is composed of a coil spring 708 arranged so as to spirally wind an outer peripheral surface of the shaft body 707. As the coil spring 708, a configuration where a wire rod is spirally wound can be employed, and a configuration where a plate-shaped member thickness direction of which is directed to an axis direction is spirally wound as shown in FIG. 14 can also be employed.

Here, with regard to the coil spring 708, the ends 708a of both sides in the axis direction are fixed to the shaft body 707. Consequently, the coil spring 708 can rotate integrally with the shaft body 707 around an axis line. In addition, in the coil spring 708, the spirally wound portion is deformable with elasticity in the axis direction.

According to the feed screw 70 configured in this manner, unlike the configuration that has been described with reference to FIG. 13, it is not necessary to machine the outer peripheral surface of the round bar-shaped shaft body to form the spiral groove 706, and thus the feed screw 70 can be efficiently manufactured. In addition, even if external force in the axis direction is applied on the first carriage 71, such force can be absorbed by the coil spring 708, with the spirally wound portion being deformed with elasticity in the axis direction. Therefore, the first carriage 71 and peripheral mechanisms are hardly damaged.

### (Overall Operation of Composite Drive Device 1)

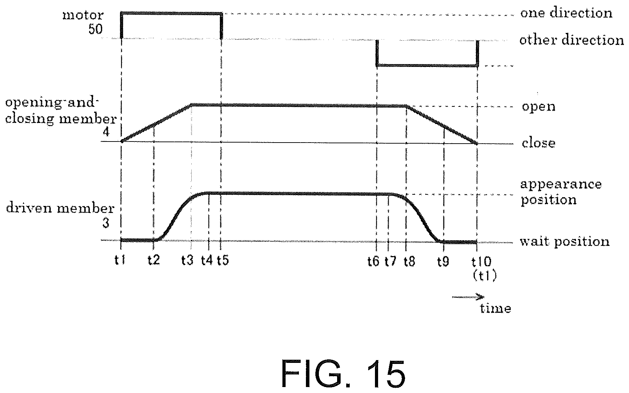

FIG. 15 is a timing chart showing an operation of the composite drive device to which the present invention is applied. In the composite drive device 1 of this embodiment, the opening-and-closing mechanism 6, the linear drive mechanism 7 and the tilt drive mechanism 9 have the drive source 5 in common. Therefore, when a state is shifted from a state shown in FIG. 1(a) and FIG. 2(a) to a state shown in FIG. 1(b) and FIG. 2(b), if the motor 50 rotates in one direction at a time t1, as shown in FIG. 15, the opening-and-closing mechanism 6 first slides the opening-and-closing member 4 until a time t3, thereby bringing the opening 20 into an opened-state at the one side Z1 in the second direction Z with respect to the opening-and-closing member 4.

Meanwhile, in the linear drive mechanism 7, a mechanistic connection of the first carriage 71 and the driven member 3 is delayed by the switching mechanism 8, and thus the driven member 3 is linearly moved toward the one side Y1 in the first direction Y from time 2 being late from time t1. Moreover, at a time t3, after the driven member 3 reaches the appearance position, if the linear drive mechanism 7 further linearly moves the driven member 3 toward the one side Y1 in the first direction Y until a time t4, the tilt drive mechanism 9 tilts the tip side of the driven member 3 toward the other side Z2 in the second direction Z. Furthermore, after the adjustment of the attitude of the driven member 3 is completed, the motor 50 is stopped at a time t5.

In doing so, as illustrated with reference to FIG. 13, in the feed screw 70, in the initial period and last period when the driven member 3 is moved from the wait position to the appearance position, the first carriage 71 engages with the second threaded portion 702, and thus the first carriage 71 moves at a low speed. On the other hand, in the intermediate period when the driven member 3 is moved from the wait position to the appearance position, the first carriage 701 engages with the first threaded portion 701, and thus the first carriage 71 moves at a high speed. In addition, when the motor 50 is stopped, the first carriage 71 engages with the second threaded portion 702, and thus the first carriage 701 is in a state of being self-locked. Consequently, in a state where the motor 50 is stopped, even if mass of the driven member 3 affects the first carriage 71, the first carriage 71 does not move. Therefore, the state shown in FIG. 1(b) and FIG. 2(b) is maintained. In addition, during from the time t3 to the time t5, the opening-and-closing mechanism 6 runs idle by the gear 683b, and thus s position of the opening-and-closing member 4 is not changed.

In addition, when the state shown in FIG. 1(b) and FIG. 2(b) is shifted to a state shown in FIG. 1(a) and FIG. 2(a), the motor 50 first starts rotating in the other direction at a time t6. As a result, the linear drive mechanism 7 linearly moves the driven member 3 toward the other side Y2 in the first direction Y. In doing so, while the linear drive mechanism 7 linearly moves the driven member 3 toward the one side Y1 in the first direction Y from the time t6 until a time t7, the tilt drive mechanism 9 restores the tilted attitude of the tip side of the driven member 3. Furthermore, if the linear drive mechanism 7 further linearly moves the driven member 3 toward the other side Y2 in the first direction Y until a time t8, the opening-and-closing mechanism 6 slides the opening-and-closing member 4 during from the time t8 to a time t10, thereby bringing the opening 20 into the closed-state. In doing so, although the linear drive mechanism 7 drives the first carriage 71 toward the other side Y2 in the first direction Y until the time t9, and linearly moves the driven member 3 toward the other side Y2 in the first direction Y, after time t9, the switching mechanism 8 stops the drive of the driven member 3. In addition, during from the time t6 to the time t8, the opening-and-closing mechanism 6 runs idle by a gear 883b, and thus the driving of the opening-and-closing member 4 is not performed.

### (Major Effect of This Embodiment)

As described above, in the composite drive device 1 of this embodiment, when opening and closing of the opening 20 by the opening-and-closing member 4 and the movement of the driven member 3 in the first direction Y between the wait position and the wait position are concurrently performed, the opening-and-closing mechanism 6 and the linear drive mechanism 7 use the drive source 5 in common. Therefore, the configuration of the composite drive device 1 can be simplified. In addition, the drive source 5 is the motor 50 provided with the first output shaft 51 and the second output shaft 52 that protrude toward the opposite side with each other. Consequently, the opening-and-closing mechanism 6 can be operated by the driving force output from the first output shaft 51, and the linear drive mechanism 7 can be operated by the driving force output from the second output shaft 52. Therefore, a mechanism for branching and transmitting the output of the motor 50 to the linear drive mechanism 7 and to the opening-and-closing mechanism 6 is unnecessary. In addition, in the composite drive device 1 of this embodiment, the tilt drive mechanism 9 that tilts the tip side of the driven member 3 to the one side Z1 or the other side Z2 in the second direction Z with the use of the abovementioned drive source 5 is provided. Consequently, the opening and closing of the opening 20 by the opening-and-closing member 4, the taking in and out of the driven member 3 through the opening 20, and the adjusting of the attitude of the driven member 3 can be performed with a simple configuration using one drive source 5. Therefore, in a case where the driven member 3 is the display member 30, a user can adjust the attitude of the display member 30 so that an image can be easily viewed.

In addition, in this embodiment, the opening-and-closing mechanism 6 slides the opening-and-closing member 4 in the second direction Z, thereby bringing the opening 20 into the opened-state at the one side Z1 in the second direction Z of the opening-and-closing member 4. Consequently, the opening-and-closing member 4 does not protrude to a side where the driven member 3 appears, and thus the presence of the opening-and-closing member 4 is hardly obstructive. In addition, in the opened-state, the first member 41 and the second member 42 are in a state of being overlapped with each other, and thus a dimension of the opening-and-closing member 4 in the second direction Z in the opened-state becomes smaller. Therefore, the presence of the opening-and-closing member 4 is hardly obstructive.

In addition, in the tilt drive mechanism 9, a configuration is employed, in which, after the control of the attitude of the driven member 3 by the guide member 74 is released, when the linear drive mechanism 7 further drives the driven member 3 toward the appearance position, the driven member 3 and the contact section 90 are brought into contact with each other in the first direction Y, thereby tilting the tip side of the driven member 3 in the second direction Z. Therefore, the attitude of the driven member 3 is switched with the use of the linear motion of the driven member 3, and thus the configuration of the tilt drive mechanism 9 can be simplified. In addition, when tilting the driven member 3, if a distance of the linear motion is long, the driven member 3 can be largely tilted, etc., and thus the attitude of the driven member 3 can be easily adjusted. In addition, the driven member 3 is provided with the main body section 31 that protrudes from the frame 2 when moving to the appearance position and the interference section 33 that protrudes in the second direction Z than the main body section 31 and comes in contact with the contact section 90 in the inside of the frame 2. Consequently, the attitude of the driven member 3 can be switched with a relatively simple configuration.

In addition, the guide member 74 has the first guide section 741 that comes in contact with the driven member 3 from the other side Z2 in the second direction Z and the second guide section 742 that comes in contact with the driven member 3 from the one side Z1 in the second direction Z. Therefore, the guide member 74 can linearly move the driven member 3 in a proper attitude. In addition, the guide member 74 has a first supporting section 741a the tip side of which is tilted to the other side Z2 in the second direction Z at the one side Y1 in the first direction Y of the first guide section 741 and a second supporting section 742a the tip side of which is tilted to the one side Z1 in the second direction Z at the one side Y1 in the first direction Y of the second guide section 742. Consequently, the driven member can be suppressed from being excessively inclined in the second direction Z due to external vibrations or the like.

In addition, the tilt drive mechanism 9 is configured to tilt the tip side of the driven member 3 to the other side Z2 in the second direction Z. Consequently, the opening-and-closing member 4 is located at the side to which the driven member 3 is tilted; however, even in such case, in this embodiment, the opening-and-closing member 4 does not protrude to the side where the driven member 3 appears, and thus the presence of the opening-and-closing member 4 is hardly obstructive.

In addition, in the linear drive mechanism 7, between the second carriage 72 and the driven member 3, a biasing member 76 that biases the interference section 33 of the driven member 3 in a direction bringing same into contact with the contact section 90, and therefore the tilt drive mechanism 9 can be securely operated.

Furthermore, the linear drive mechanism 7 is provided with the switching mechanism 8, and thus even when the first carriage 71 starts moving, the linear motion of the driven member 3 can be delayed. Therefore, when making the driven member 3 appear from the opening 20 to the outside, interference between the driven member 3 and the opening-and-closing member 4 can be suppressed. In addition, the switching mechanism 8 has the lever 81 and the cam mechanism 85, and thus can switch the connection of the driven member 3 and the first carriage 71 with a relatively simple configuration.

In addition, in the closed-state, the opening-and-closing mechanism 6 positions the first member 41 to be aligned with the second member 42 in the second direction Z, and in the opened-state, positions the first member and the second member to take an inclined attitude where the ends 41a, 42a of the other side Z2 in the second direction Z are pulled into the frame 2 in a state where the first member 41 and the second member 42 are overlapped with each other in the first direction Y. Consequently, the presence of the opening-and-closing member 4 is hardly obstructive.

In addition, the opening-and-closing mechanism 6 slides the first member 41 and the second member 42 along the second direction Z by the pinion 62, the first rack 410 and the second rack 420, and therefore can achieve, with a relatively simple configuration, the closed-state where the first member 41 and the second member 42 are aligned in the second direction Z and the opened-state where the first member 41 and the second member 42 are overlapped with each other in the first direction Y.

In addition, the opening-and-closing mechanism 6 includes the gear 683b in the gear transmission mechanism 68, and thus, after causing the opening-and-closing member 4 to perform the opening and closing operation, the driving of the driven member 3 can be continued, whereas the driving of the opening-and-closing member 4 can be stopped. Therefore, the mechanism 6 is suitable for operating a plurality of mechanisms by the common drive source 5.

### (Other Embodiment)

In the abovementioned embodiment, in the opening-and-closing mechanism 6, in the opened-state, although the opening-and-closing member 4 takes the inclined attitude where the ends 41a, 42a of the other side Z2 in the second direction Z are pulled into the inside of the frame 2, the opening-and-closing member 4 may take an inclined attitude where the ends of the one side Z1 in the second direction Z may be pulled into the inside of the frame 2. In addition, in the opened-state, when bringing the state where the opening-and-closing member 4 is pulled into the inside of the frame 2, an embodiment in which the opening-and-closing member 4 takes a horizontal attitude or a vertical attitude being pulled into the inside of the frame 2 may be employed, not limited to the inclined attitude. In addition, in the abovementioned embodiment, in the opening-and-closing mechanism 6, although the transmission mechanism 67 is composed of the gear transmission mechanism 68 and the belt transmission mechanism 69, the transmission mechanism 67 may be composed of only the gear transmission mechanism 68. In the abovementioned embodiment, in the switching mechanism 8, although the engaging shaft 34 is formed in the driven member 3, and the first contact section 814 and the second contact section 815 are formed in the lever 81, the engaging shaft 34 may be formed in the lever 81, and the first contact section 814 and the second contact section 815 may be formed in the driven member 3. In the abovementioned embodiment, although the opening-and-closing mechanism 6 is operated by the driving force output from the first output shaft 51 of the motor 50, and the linear drive mechanism 7 is operated by the driving force output from the second output shaft 52, the present invention may be applied to a drive device having a configuration in which the driving force output from a common output shaft of the motor 50 is branched and transmitted to the opening-and-closing mechanism 6 and to the linear drive mechanism 7. In the abovementioned embodiment, although the feed screw 70 in which the pitches of the spiral groove 706 are switched in the axis direction, the present invention may be applied to a drive device using the feed screw 70 in which the pitches of the spiral groove 706 are equal in the axis direction. In the abovementioned embodiment, although the opening-and-closing member 4 is provided with two members (the first member 41 and the second member 42), the present invention may be applied to a case where three or more of members are provided. In the abovementioned embodiment, although the opening-and-closing mechanism 6 slides the opening-and-closing member 4 in the second direction Z, the present invention may be applied to a case where the opening-and-closing mechanism 6 rotates the opening-and-closing member 4 to open and close the opening 20. In the abovementioned embodiment, when the switching mechanism 8 is configured, although the engaging shaft 34 is provided in the driven member 3, and the concave section 813 (the first contact section 814 and the second contact section 815) is provided in the lever 81, the engaging shaft 34 may be in the lever 81, and the concave section 813 (the first contact section 814 and the second contact section 815) may be provided in the driven member 3.

### REFERENCE SIGNS LIST

1...drive device
2...frame
3...driven member
4...opening-and-closing member
5...drive source
6...opening-and-closing mechanism
7...linear drive mechanism
9...tilt drive mechanism
20...opening
30...display member
31...main body section
32...base
33...interference section
34...engaging shaft
41...first member
42...second member
50...motor
51... first output shaft
52...second output shaft
60...connecting section
61...holder
62...pinion
66...rotary member
67...transmission mechanism
68...gear transmission mechanism
69...belt transmission mechanism
70...feed screw
71...first carriage
72...second carriage
74...guide member
75...gear transmission mechanism
76...biasing member (second biasing member)
77...guide shaft
81...lever
82...cam pin
84...cam surface
85...cam mechanism
88...biasing member (first biasing member)
90...contact section
410...first rack
420...second rack
683b...gear
701...first threaded portion
702...second threaded portion
706...spiral groove
713...convex section (convex section for preventing slip-off)
813...concave section
814...first contact section
815...second contact section
Y...first direction
Z...second direction
X...third direction

## Claims

1. A composite drive device, **characterized in that** the composite drive device comprising:
a frame, provided with an opening configured to open toward one side in a first direction;
a driven member, located in an inside of the frame;
an opening-and-closing member, configured to close the opening;
a drive source;
an opening-and-closing mechanism, configured to drive the opening-and-closing member by driving force of the drive source, so as to open and close the opening; and
a linear drive mechanism, configured to linearly move the driven member to the one side and other side in the first direction by driving force of the drive source, thereby moving the driven member between an appearance position protruded to an outside from the opening and a wait position retracted to the inside from the opening.

2. The composite drive device according to claim 1, wherein
the composite drive device comprising a tilt drive mechanism, configured to tilt a tip side of the driven member to one side or other side in a second direction, which intersects the first direction, by driving force of the drive source.

3. The composite drive device according to claim 2, wherein the linear drive mechanism comprises:
a feed screw, configured to rotate around an axis line extending in the first direction by driving force of the drive source; and
a first carriage, configured to engage with the feed screw and move to the one side in the first direction when the driven member is moved from the wait position to the appearance position.

4. The composite drive device according to claim 3, wherein
the linear drive mechanism comprises a guide member, configured to control an attitude of the driven member while the driven member moves from the wait position to the appearance position, and
wherein the tilt drive mechanism comprises a contact section with which the driven member comes in contact at the one side or the other side in the second direction when the linear drive mechanism further drives the driven member toward the appearance position after a control of the attitude of the driven member by the guide member is released.

5. The composite drive device according to claim 4, wherein the driven member comprises:
a main body section, configured to protrude from the frame when the driven member moves to the appearance position; and
an interference section, configured to protrude from the main body section to the one side or the other side in the second direction and come in contact with the contact section in the inside of the frame.

6. The composite drive device according to claim 4 or 5, wherein the linear drive mechanism comprises:
a guide shaft, fixed to the frame;
a second carriage, configured to be provided with a guide hole that the guide shaft penetrates through and to linearly move with the driven member in a state where the driven member is swingablly supported in the second direction; and
a biasing member, configured to be provided between the second carriage and the driven member and to bias the driven member in a direction for coming in contact with the contact section.

7. The composite drive device according to any one of claims 4 to 6, wherein the guide member comprises a first guide section and a second guide section, configured to support the driven member from both sides in the second direction.

8. The composite drive device according to claim 7, wherein
the guide member comprises a first supporting section,
a tip side of the first supporting section is tilted to a side opposite to the second guide section at one side in the first direction of the first guide section.

9. The composite drive device according to claim 7 or 8, wherein
the guide member comprises a second supporting section,
a tip side of the second supporting section is tilted to a side opposite to the first guide section at one side in the first direction of the second guide section.

10. The composite drive device according to any one of claims 3 to 9, wherein the linear drive mechanism comprises a switching mechanism, configured to bring a disconnected state where a mechanistic connection of the driven member and the first carriage is disconnected when the first carriage starts moving to one side in the first direction, and bring a connected state where the driven member and the first carriage are mechanistically connected after the first carriage moves a predetermined distance to one side in the first direction.

11. The composite drive device according to claim 10, wherein the switching mechanism comprises:
a lever, configured to be supported at the first carriage rotatably around an axis line intersecting the first direction; and
a cam mechanism, configured to switch an attitude of the lever in accordance with a movement of the first carriage in the first direction to achieve the disconnected state and the connected state.

12. The composite drive device according to any one of claims 3 to 11, wherein the feed screw comprises:
a first threaded portion, provided with a spiral groove at a first pitch; and
a second threaded portion, provided with a spiral groove at a second pitch shorter than the first pitch.

13. The composite drive device according to claim 12, wherein
the feed screw comprises the second threaded portion at both sides in the first direction with respect to the first threaded portion.

14. The composite drive device according to any one of claims 2 to 13, wherein
the opening-and-closing mechanism slides, by driving force of the drive source, the opening-and-closing member along the second direction from a position at which the opening is in a closed-state, thereby bringing the opening into an opened-state at one side in the second direction with respect to the opening-and-closing member.

15. The composite drive device according to claim 14, wherein
the opening-and-closing member comprises a first member and a second member, and wherein
in the closed-state, the opening-and-closing mechanism positions the first member to be aligned with the second member at the other side in the second direction, and in the opened-state, moves the second member to the other side in the second direction, and in a state where the second member is overlapped with the first member in the first direction, positions the first member and the second member to take an inclined attitude where ends of one side in the second direction or ends of the other side in the second direction of the first member and the second member are pulled into the frame.

16. The composite drive device according to claim 15, wherein
the opening-and-closing mechanism positions, in the opened-state, the first member and the second member to take an inclined attitude where the ends of one side in the second direction of the first member and the second member are pulled into the frame.

17. The composite drive device according to claim 16, wherein the opening-and-closing mechanism comprises:
a holder, supported at the frame, at an end of one side in the second direction, rotatably around a first axis line extending in a third direction intersecting the first direction and the second direction;
a pinion, supported at the holder so as to be movable in the second direction and rotatable around a second axis line extending in the third direction; and
a rotary member, configured to rotate, around a third axis line extending in the third direction, at a position separated from the first axis line in the first direction and the second direction, by driving force of the drive source,
wherein the first member is provided with a first rack meshing with the pinion and is supported at the holder so as to be movable in the second direction,
wherein the second member is provided with a second rack meshing with the pinion and is supported at the holder so as to be movable in the second direction,
wherein the rotary member is connected to the first member through a mutually rotatable connecting section,
wherein when the rotary member rotates around the third axis line to one side and the connecting section moves in a direction approaching the first axis line, the first member and the second member overlap with each other in the first direction with the pinion sandwiched therebetween, thereby opening the opening,
and wherein when the rotary member rotates around the third axis line to other side and the connecting section moves in a direction separating from the first axis line, the first member and the second member are aligned in the second direction with the pinion sandwiched therebetween, thereby bringing the opening into a closed-state.

18. The composite drive device according to claim 17, wherein
the opening-and-closing mechanism comprises a gear transmission mechanism configured to transmit driving force of the drive source to the rotary member,
and wherein the gear transmission mechanism includes a gear provided with teeth in a part in a circumferential direction.

19. The composite drive device according to any one of claims 1 to 18, wherein
the drive source is a motor capable of outputting bidirectional rotation.

20. The composite drive device according to claim 19, wherein
the motor comprises a first output shaft and a second output shaft that protrude toward an opposite side with each other,
wherein the opening-and-closing mechanism is operated by driving force output from the first output shaft,
and wherein the linear drive mechanism is operated by driving force output from the second output shaft.

21. The composite drive device according to any one of claims 1 to 20, wherein
the driven member is a display member that displays an image.
